(19) Europäisches Patentamt
European Patent Office
Office européen des brevets

(11) EP 3 070 143 A1

(12) EUROPEAN PATENT APPLICATION

(43) Date of publication:
**21.09.2016 Bulletin 2016/38**

(21) Application number: **16160227.1**

(22) Date of filing: **14.03.2016**

(51) Int Cl.:
***C09K 11/02*** *(2006.01)*
***C09K 15/12*** *(2006.01)*
***C09K 15/32*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **17.03.2015 JP 2015054008**

(71) Applicant: **Konica Minolta, Inc.**
**Tokyo 100-7015 (JP)**

(72) Inventors:
- **Yamane, Chigusa**
  **Tokyo 100-7015 (JP)**
- **Goan, Kazuyoshi**
  **Tokyo 100-7015 (JP)**
- **Kawasaki, Hidekazu**
  **Tokyo 100-7015 (JP)**
- **Kashiwagi, Tsuneo**
  **Tokyo 100-7015 (JP)**
- **Fujieda, Yoichi**
  **Tokyo 100-7015 (JP)**

(74) Representative: **Henkel, Breuer & Partner**
**Patentanwälte**
**Maximiliansplatz 21**
**80333 München (DE)**

# (54) COATED SEMICONDUCTOR NANOPARTICLE AND METHOD FOR MANUFACTURING THE SAME

(57) An object is to provide a coated semiconductor nanoparticle having sufficient fluorescence intensity.

A method for manufacturing a coated semiconductor nanoparticle according to the present invention relates to a method for manufacturing a coated semiconductor nanoparticle containing a semiconductor nanoparticle having a core/shell structure and a translucent coating layer containing silicon coating the semiconductor nanoparticle. The method includes a step of bringing the semiconductor nanoparticle into contact with a silane compound in the presence of an antioxidant and that the antioxidant contains at least one kind selected from the group consisting of compounds containing at least one of a phosphor atom and a sulfur atom and no hydroxy group.

FIG.1

10

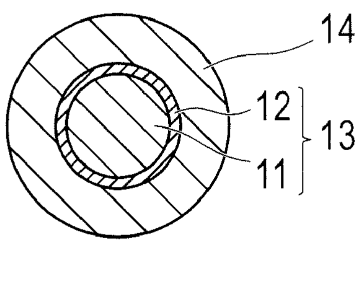


EP 3 070 143 A1

## Description

### CROSS-REFERENCE TO RELATED APPLICATION

This application is based on Japanese Patent Application No. 2015-054008 filed on March 17, 2015, the contents of which are incorporated herein by reference.

### BACKGROUND

1. Technical Field

The present invention relates to a coated semiconductor nanoparticle and a method for manufacturing the same. In more detail, the present invention relates to a technology for improving fluorescence intensity of a coated semiconductor nanoparticle.

2. Description of Related Arts

In recent years, a high performance fluorescent body which has high luminous efficiency and luminance and emits light with various colors has been indispensable in order to be used for a labelling agent in bioimaging, a display, LED illumination, or the like. In addition, in the display or the illumination, a color rendering property and durability are demanded for the fluorescent body. A conventional fluorescent body using a rare earth ion or a transition metal ion has better durability than an organic dye or the like, and therefore has been used for a display, or the like. However, the luminance or color rendering property thereof is not necessarily sufficient. A fluorescent body having higher performance than the conventional fluorescent body, particularly a fluorescent body having a high luminance is demanded.

As a high performance fluorescent body for realizing these demands, a semiconductor nanoparticle is attracting attention. As a fluorescent semiconductor nanoparticle, a semiconductor nanoparticle of the II-VI group or the III-V group is known widely. However, when these semiconductor nanoparticles are used, in the present circumstances, the luminance per particle is still insufficient.

In general, the luminance of a particle is very low when only a core semiconductor nanoparticle is used. Therefore, a technology of using a semiconductor material having a wider bandgap than a core particle as a shell has been proposed. By using such a semiconductor nanoparticle having a core/shell structure, a quantum well is formed, and the luminance is significantly increased due to a quantum confinement effect.

It is known that the luminance of the semiconductor nanoparticle is reduced by aggregation or deterioration caused by an external environment. Therefore, as a method for increasing the luminance, the following technology has been proposed. That is, a solid material suitable for an optical application, exhibiting a high luminance light emitting property over a long period of time under various environments, is obtained by coating a surface of a semiconductor nanoparticle with a material such as transparent glass or by confining the semiconductor nanoparticle in a dispersed and fixed manner in a matrix made of the material.

For example, Patent Literature 1 discloses a method for manufacturing a quantum dot silicate thin film, including replacing a surface of a quantum dot manufactured by a wet method with a silane compound having a phosphine functional group, an amine functional group, or a thiol functional group, and a sol-gel reactive group, then coating a substrate with the substituted quantum dot, and then performing a sol-gel reaction and a heat treatment.

Patent Literature 2 discloses a method for manufacturing a fluorescent body, including mixing a hydrolyzed solution of a metal alkoxide having an adjusted pH of 5.5 to 8.5 and a dispersion of a semiconductor nanoparticle having a luminous efficiency of 25% or more, and then curing the resulting mixture.

Patent Literature 3 discloses a method for manufacturing a fluorescent body (layer-by-layer method), including treating a base which has been subj ected to a surface treatment with organoalkoxy silane with an aqueous solution of a semiconductor nanoparticle containing a surfactant and organoalkoxy silane alternately.

Patent Literature 4 discloses a method for manufacturing a fluorescent fine particle, including mixing and stirring two kinds of metal alkoxides having hydrolysis rates different from each other with an organic solvent in which semiconductor nanoparticles are dispersed to obtain a semiconductor nanoparticle aggregate, and then adding a solution containing a metal alkoxide to an alkaline aqueous solution containing the semiconductor nanoparticle aggregate to form a coating layer on a surface of the semiconductor nanoparticle aggregate.

Citation List

Patent Literatures

Patent Literature 1: JP-2005-039251 A
Patent Literature 2: JP 2006-335873 A
Patent Literature 3: JP 2006-282977 A
Patent Literature 4: WO 2011/081037 A

## SUMMARY

Problems to be Solved by the Invention

However, even a semiconductor nanoparticle coated by the above-described manufacturing method does not have fluorescenceintensity ata desiredlevel,disadvantageously.
Therefore, an object of the present invention is to provide a coated semiconductor nanoparticle having sufficient fluorescence intensity.

Means for Solving the Problems

The above-described problems of the present invention are solved by the following structure.

1. A method for manufacturing a coated semiconductor nanoparticle containing a semiconductor nanoparticle having a core/shell structure and a translucent coating layer containing silicon coating the semiconductor nanoparticle, including a step of bringing the semiconductor nanoparticle into contact with a silane compound in the presence of an antioxidant, in which the antioxidant contains at least one kind selected from the group consisting of compounds containing at least one of a phosphor atom and a sulfur atom and no hydroxy group.
2. The method for manufacturing a coated semiconductor nanoparticle according to the above 1, in which the antioxidant contains at least one kind selected from the group consisting of a phosphite compound and a thioether compound.
3. The method for manufacturing a coated semiconductor nanoparticle according to the above 1 or 2, in which the antioxidant contains at least one kind selected from the group consisting of compounds represented by the following General Formulae 1 to 6 and the Chemical Formula S1 to S2.

[Chem. 1]

[General Formula 1]

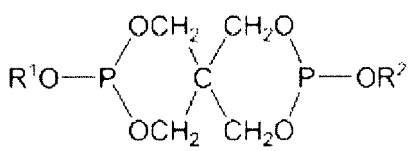

(In the formula, $R^1$ and $R^2$ each independently represent a substituted or unsubstituted alkyl group having 1 to 30 carbon atoms.)
[Chem. 2]

[General Formula 2]

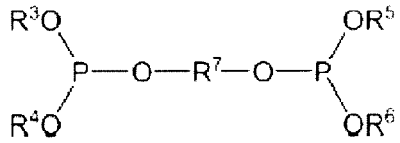

(In the formula, $R^3$, $R^4$, $R^5$, and $R^6$ each independently represent a substituted or unsubstituted alkyl group having 1 to 25 carbon atoms or a substituted or unsubstituted aryl group having 6 to 30 carbon atoms, and $R^7$ represents a substituted or unsubstituted alkylene group having 4 to 33 carbon atoms or a substituted or unsubstituted arylene group having 6 to 40 carbon atoms.)

[Chem. 3]

[General Formula 3]

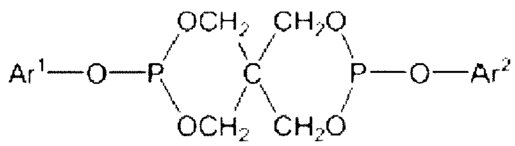

(In the formula, $Ar^1$ and $Ar^2$ each independently represent a substituted or unsubstituted aryl group having 6 to 35 carbon atoms.)

[Chem. 4]

[General Formula 4]

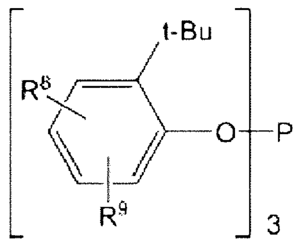

(In the formula, $R^8$ and $R^9$ each independently represent a hydrogen atom or a substituted or unsubstituted alkyl group having 1 to 4 carbon atoms.)

[Chem. 5]

[General Formula 5]

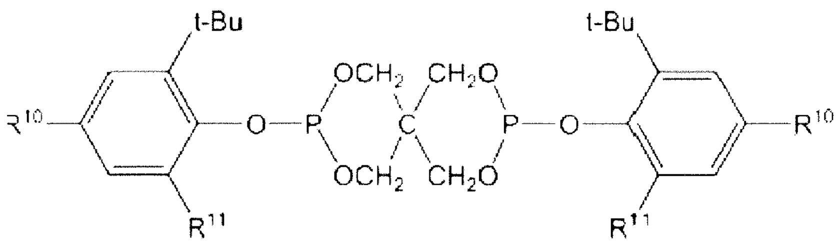

(In the formula, $R^{10}$ and $R^{11}$ each independently represent a hydrogen atom or a substituted or unsubstituted alkyl group having 1 to 4 carbon atoms.)

[Chem. 6]

[General Formula 6]

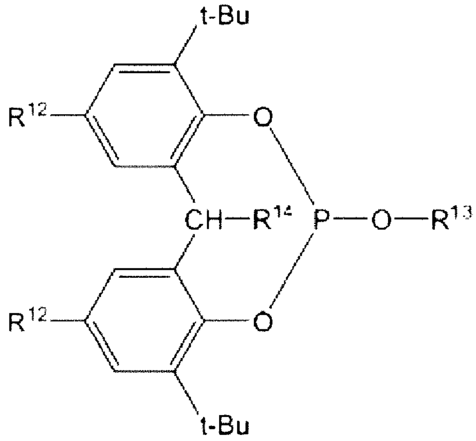

(In the formula, $R^{12}$ and $R^{14}$ each independently represent a hydrogen atom or a substituted or unsubstituted alkyl group having 1 to 4 carbon atoms, and $R^{13}$ represents a substituted or unsubstituted alkyl group having 1 to 18 carbon atoms.

[Chem. 7]

[Chemical Formula S1]

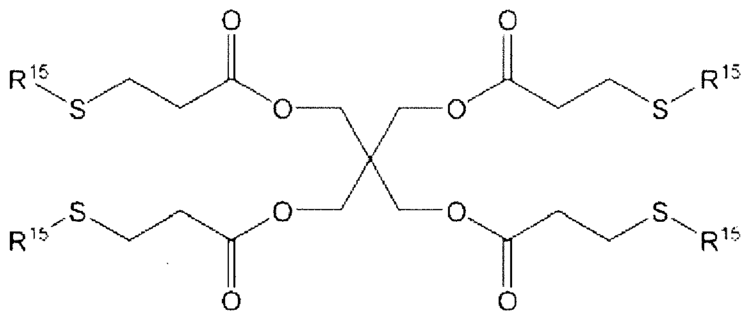

$R^{15}$: alkyl group having 12 carbon atoms

[Chemical Formula S2]

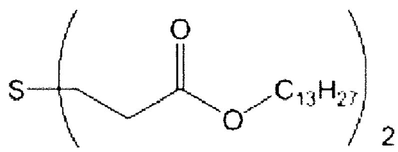

4. The method for manufacturing a coated semiconductor nanoparticle according to any one of the above 1 to 3, in which, in the step, the antioxidant is added to the dispersion in which the semiconductor nanoparticles are dispersed such that the ratio of the antioxidant is 0.1 to 200 mol% with respect to 1 mol of the semiconductor nanoparticle.
5. A coated semiconductor nanoparticle manufactured by the manufacturing method according to any one of the above 1 to 4.
6. A semiconductor nanoparticle aggregate containing an agglomerate in which the plurality of the coated semiconductor nanoparticles according to the above 5 is agglomerated.

Effects of the Invention

According to the present invention, it is possible to provide a coated semiconductor nanoparticle having sufficient

fluorescence intensity.

## BRIEF DESCRIPTION OF THE DRAWINGS

Fig. 1 is a schematic cross sectional view illustrating a typical structure of a coated semiconductor nanoparticle according to an embodiment of the present invention; and

Fig. 2 is a schematic cross sectional view illustrating a typical structure of a semiconductor nanoparticle aggregate according to an embodiment of the present invention.

## DETAILED DESCRIPTION

Hereinafter, embodiments of the present invention will be described. However, the present invention is not limited only to the following embodiments. As for the word "to" indicating a numerical range, the numerical range includes a lower limit value and an upper limit value described before and after "to".

A method for manufacturing a coated semiconductor nanoparticle according to an aspect of the present invention relates to a method for manufacturing a coated semiconductor nanoparticle containing a semiconductor nanoparticle having a core/shell structure and a translucent coating layer containing silicon coating the semiconductor nanoparticle. The method includes a step of bringing the semiconductor nanoparticle into contact with a silane compound in the presence of an antioxidant and that the antioxidant contains at least one kind selected from the group consisting of compounds containing at least one of a phosphor atom and a sulfur atom and no hydroxy group. A coated semiconductor nanoparticle according to another aspect of the present invention is manufactured by the above-described manufacturing method.

In the manufacturing method according to the presentaspect, it is possible to provide a coated semiconductor nanoparticle having sufficient fluorescence intensity by having the above-described structure.

The reason why the coated semiconductor nanoparticle manufactured by the manufacturing method according to the present aspect exhibits the above-described effect is not clear. However, the present inventors estimate the reason as follows. That is, usually, a semiconductor nanoparticle is present in a solution while an organic ligand is coordinated to a surface of the particle. When the coated semiconductor nanoparticle is manufactured, a silane compound is substituted for the organic ligand in a solution (hereinafter, this substitution step is also referred to as "silane treatment on surface"). In the manufacturing method according to the present aspect, when the semiconductor nanoparticle is brought into contact with a silane compound, exchange between the organic ligand and the silane compound occurs slowly (the exchange rate is low) because the contact is performed in the presence of an antioxidant having a specific structure. Therefore, layers of the silane compound can be formed densely on the surface of the semiconductor nanoparticle. It is estimated that, as a result, a translucent coating layer having ahighdensityand fewdefects is formed to improve fluorescence intensity of the semiconductor nanoparticle.

The organic ligand coordinated to the surface of the semiconductor nanoparticle protects the semiconductor nanoparticle from an external environment (light, oxygen, heat) or the like. However, in the silane treatment on surf ace, the surface of the semiconductor nanoparticle becomes defenseless temporarily without the organic ligand, and the semiconductor nanoparticle is easily deteriorated by an influence of oxygen present in the reaction system, a radicalized organic ligand and/or the oxidized organic ligand, or the like. In the manufacturing method according to the present aspect, it is estimated that, in the silane treatment on surface, such a deterioration of the semiconductor nanoparticle is suppressed by the presence of the antioxidant near the surface of the semiconductor nanoparticle to maintain the fluorescence intensity of the semiconductor nanoparticle. The above-described mechanism is based on estimation. The present invention is not limited in any way to the mechanism.

Hereinafter, first, the structure of the coated semiconductor nanoparticle according to an aspect of the present invention will be described. Thereafter, a method for manufacturing the coated semiconductor nanoparticle will be described.

<Coated semiconductor nanoparticle>

Fig. 1 is a schematic cross sectional view illustrating a typical structure of a coated semiconductor nanoparticle according to an embodiment of the present invention. In Fig. 1, a coated semiconductor nanoparticle 10 includes a semiconductor nanoparticle 13 containing a core part 11 and a shell part 12 and a translucent coating layer 14 coating the semiconductor nanoparticle 13. In Fig. 1, an entire surface of the semiconductor nanoparticle 13 is coated with the translucent coating layer 14. However, the coated semiconductor nanoparticle according to an aspect of the present invention is not limited only to such a form, but at least apart of the surface of the semiconductor nanoparticle 13 is only

required to be coated with the translucent coating layer 14.

[Semiconductor nanoparticle]

Here, the semiconductor nanoparticle means a particle formed of semiconductor material crystal and having a predetermined size with a quantum confinement effect. The particle is a fine particle which has a particle diameter of about several nanometers to several tens of nanometers and can obtain a quantum dot effect described below.

An energy level E of such a semiconductor nanoparticle is generally represented by the following Formula (1) when Planck's constant is "h", the effective mass of an electron is "m", and a radius of the semiconductor nanoparticle is "R".

[Math. 1]

Formula (1)

$$E \propto h^2/mR^2$$

As represented by Formula (1), a bandgap of the semiconductor nanoparticle increases in proportion to "$R^{-2}$", and a so-called quantum dot effect can be obtained. In this way, it is possible to control a bandgap value of the semiconductor nanoparticle by controlling and regulating the particle diameter of the semiconductor nanoparticle. That is, by controlling and regulating a particle diameter of a fine particle, a variety which is not present in a usual atom can be imparted to the fine particle. Therefore, it is possible to excite the fine particle with light or to convert light into light having a desired wavelength to be emitted. Here, such a luminous semiconductor nanoparticle material is defined as a semiconductor nanoparticle.

The semiconductor nanoparticle according to the present aspect has a core/shell structure. By having the core/shell structure, a quantum well is formed, and the luminance is increased due to a quantum confinement effect.

Here, the semiconductor nanoparticle having a core/shell structure is also simply referred to as a "core shell semiconductor nanoparticle". Here, as a notation of the semiconductor nanoparticle having a core/shell structure, for example, when the core part is CdSe and the shell part is ZnS, the nanoparticle is also written as "CdSe/ZnS". Such a core shell semiconductor nanoparticle is also referred to as "CdSe/ZnS core shell semiconductor nanoparticle".

[Constituent material of semiconductor nanoparticle]

As a constituent material of a core part of the core shell semiconductor nanoparticle, the following materials can be used.

Examples thereof include a simple substance of a long period periodic table group 14 element such as carbon, silicon, germanium, or tin; a simple substance of a long period periodic table group 15 element such as phosphorus (black phosphorus) ; a simple substance of a long period periodic table group 16 element such as selenium or tellurium; a compound formed of a plurality of long period periodic table group 14 elements, such as silicon carbide (SiC); a compound of a long period periodic table group 14 element and a long period periodic table group 16 element, such as tin oxide (IV) ($SnO_2$), tin sulfide (II, IV) (Sn (II) Sn(IV) $S_3$), tin sulfide (IV) ($SnS_2$), tinsulfide (II) (SnS), tinselenide (II) (SnSe), tintelluride (II) (SnTe), zinc sulfide (II) (PbS), zinc selenide (II) (PbSe), or zinc telluride (II) (PbTe); a compound of a long period periodic table group 13 element and a long period periodic table group 15 element (or a III-V group compound semiconductor), such as boron nitride (BN), boron phosphide (BP), boron arsenide (BAs), aluminum nitride (AlN), aluminum phosphide (AlP), aluminum arsenide (AlAs), aluminum antimonide (AlSb), gallium nitride (GaN), gallium phosphide (GaP), gallium arsenide (GaAs), gallium antimonide (GaSb), indium nitride (InN), indium phosphide (InP), indium arsenide (InAs), or indium antimonide (InSb); a compound of a long period periodic table group 13 element and a long period periodic table group 16 element, such as aluminum sulfide ($Al_2S_3$), aluminum selenide ($Al_2Se_3$), gallium sulfide ($Ga_2S_3$), gallium selenide ($Ga_2Se_3$), gallium telluride ($Ga_2Te_3$), indium oxide ($In_2O_3$), indium sulfide ($In_2S_3$), indium selenide ($In_2Se_3$), or indium telluride ($In_2Te_3$); a compound of a long period periodic table group 13 element and a long period periodic table group 17 element, such as thallium chloride (I) (TlCl), thallium bromide (I) (TlBr), or thallium iodide (I) (TlI); a compound of a long period periodic table group 12 element and a long period periodic table group 16 element (or a II-VI group compound semiconductor), such as zinc oxide (ZnO), zinc sulfide (ZnS), zinc selenide (ZnSe), zinc telluride (ZnTe), cadmium oxide (CdO), cadmium sulfide (CdS), cadmium selenide (CdSe), cadmium telluride (CdTe), mercury sulfide (HgS), mercury selenide (HgSe), or mercury telluride (HgTe); a compound of a long period periodic table group 15 element and a long period periodic table group 16 element, such as arsenic sulfide (III) ($As_2S_3$), arsenic selenide (III) ($As_2Se_3$), arsenic telluride (III) ($As_2Te_3$), antimony sulfide (III) ($Sb_2S_3$), antimony selenide (III) ($Sb_2Se_3$), antimony telluride (III) ($Sb_2Te_3$), bismuth sulfide (III) ($Bi_2S_3$), bismuth selenide (III) ($Bi_2Se_3$), or bismuth telluride (III) ($Bi_2Te_3$); a

compound of a long period periodic table group 11 element and a long period periodic table group 16 element, such as copper oxide (I) ($Cu_2O$) or copper selenide (I) ($Cu_2Se$); a compound of a long period periodic table group 11 element and a long period periodic table group 17 element, such as copper chloride (I) (CuCl), copper bromide (I) (CuBr), copper iodide (I) (CuI), silver chloride (AgCl), or silver bromide (AgBr); a compound of a long period periodic table group 10 element and a long period periodic table group 16 element, such as nickel oxide (II) (NiO); a compound of a long period periodic table group 9 element and a long period periodic table group 16 element, such as cobalt oxide (II) (CoO) or cobalt sulfide (II) (CoS); a compound of a long period periodic table group 8 element and a long period periodic table group 16 element, such as triiron tetraoxide ($Fe_3O_4$) or iron sulfide (II) (FeS); a compound of a long period periodic table group 7 element and a long period periodic table group 16 element, suchas manganese oxide (II) (MnO); a compound of a long period periodic table group 6 element and a long period periodic table group 16 element, such as molybdenum sulfide (IV) ($MoS_2$) or tungsten oxide (IV) ($WO_2$); a compound of a long period periodic table group 5 element and a long period periodic table group 16 element, such as vanadium oxide (II) (VO), vanadium oxide (IV) ($VO_2$), or tantalum oxide (V) ($Ta_2O_5$); a compound of a long period periodic table group 4 element and a long period periodic table group 16 element, such as titanium oxide ($TiO_2$, $Ti_2O_5$, $Ti_2O_3$, $Ti_5O_9$, or the like) ; a compound of a long period periodic table group 2 element and a long period periodic table group 16 element, such as magnesium sulfide (MgS) or magnesium selenide (MgSe) ; a chalcogen spinel such as cadmium (II) chromium (III) oxide ($CdCr_2O_4$), cadmium (II) chromium (III) selenide ($CdCr_2Se_4$), copper (II) chromium (III) sulfide ($CuCr_2S_4$), or mercury (II) chromium (III) selenide ($HgCr_2Se_4$); and barium titanate ($BaTiO_3$). These constituent materials of the core part may be used singly or a combination of two or more kinds thereof may be used.

Among these materials, preferable examples are a compound of a long period periodic table group 14 element and a long period periodic table group 16 element, such as $SnS_2$, SnS, SnSe, SnTe, PbS, PbSeorPbTe; a III-V group compound semiconductor such as GaN, GaP, GaAs, GaSb, InN, InP, InAs, or InSb; a compound of a long period periodic table group 13 element and a long period periodic table group 16 element, such as $Ga_2O_3$, $Ga_2S_3$, $Ga_2Se_3$, $Ga_2Te_3$, $In_2O_3$, $In_2S_3$, $In_2Se_3$, or $In_2Te_3$; a II-VI group compound semiconductor such as ZnO, ZnS, ZnSe, ZnTe, CdO, CdS, CdSe, CdTe, HgO, HgS, HgSe, or HgTe; a compound of a long period periodic table group 15 element and a long period periodic table group 16 element, such as $As_2O_3$, $As_2S_3$, $As_2Se_3$, $As_2Te_3$, $Sb_2O_3$, $Sb_2S_3$, $Sb_2Se_3$, $Sb_2Te_3$, $Bi_2O_3$, $Bi_2S_3$, $Bi_2Se_3$, or $Bi_2Te_3$; and a compound of a long period periodic table group 2 element and a long period periodic table group 16 element, such as MgS or MgSe. More preferable examples are Si, Ge, GaN, GaP, InN, InP, $Ga_2O_3$, $Ga_2S_3$, $In_2O_3$, $In_2S_3$, ZnO, ZnS, ZnSe, CdO, CdS, and CdSe. These materials do not contain a negative element having high toxity, and therefore have excellent environmental pollution resistance and excellent safety to organisms. Among these materials, InP, CdSe, ZnSe, and CdS are particularly preferable in terms of luminous stability.

For the shell part, any material can be used without a limitation as long as the material acts as a protection film of the core part. The shell part preferably contains a semiconductor having a larger bandgap than that in the core part. By using such a semiconductor for the shell part, an energy barrier is formed in the semiconductor nanoparticle, and excellent luminous performance can be obtained.

The semiconductor material preferably used for the shell depends on the bandgap of the core used. However, examples thereof include a semiconductor of one kind or more selected from the group consisting of ZnO, ZnS, ZnSe, ZnTe, CdO, CdS, CdSe, CdTe, MgS, MgSe, GaAs, GaN, GaP, GaAs, GaSb, HgO, HgS, HgSe, HgTe, InAs, InN, InP, InSb, AlAs, AlN, AlP, AlSb, and an alloy and a mixed crystal thereof. Among these materials for the shell part, ZnS, ZnSe, ZnTe, and CdSe are preferable from a viewpoint of improving a luminance.

The shell part does not necessarily coat the entire surface of the core part as long as a problem caused by partial exposure of the core part does not occur. The shell part is only required to coat at least a part of the core part. The core/shell structure is preferably formed by at least two kinds of compounds. A gradient structure may be formed by two or more kinds of compounds.

The thickness of the shell part is not particularly limited, but is preferably from 0.1 to 10 nm, and more preferably from 0.1 to 5 nm.

In general, it is possible to control a luminous color by an average particle diameter of a semiconductor nanoparticle. A thickness of a coating film within the above-described range is from a thickness corresponding to several atoms to a thickness less than one semiconductor nanoparticle, and makes it possible to fill the semiconductor nanoparticles densely and to obtain a sufficient luminous amount. The presence of the coating film can suppress a defect on a particle surface of a core particle, transfer of a non-light emitting electron energy due to electron trap to a dangling bond, and reduction in a quantum efficiency.

For measuring the average particle diameter of the core shell semiconductor nanoparticle, a known method can be used. Examples thereof include a method of observing a particle of a semiconductor nanoparticle with a transmission electron microscope (TEM) and then determining a number average particle diameter of a particle diameter distribution; a method of observing the predetermined number of semiconductor nanoparticles extracted at random with a TEM and determining an average volume particle diameter calculated by determining an average value of particle diameters in terms of volume; a method of determining an average particle diameter with an atomic force microscope

(AFM); a method of measurement with a particle diameter measurement device by a dynamic light scattering method (for example, ZETASIZER Nano Series Nano-ZS manufactured by Malvern Instruments Ltd.); and a method of deriving a particle diameter distribution using a particle diameter distribution simulation calculation of the semiconductor nanoparticle from a spectrum obtained by a small angle X-rayscattering technique. Here, the average particle diameter is represented by an average volume particle diameter, which is calculated by observing the predetermined number of semiconductor nanoparticles extracted at random with a TEM and determining an average value of particle diameters in terms of volume. Specifically, the average volume particle diameter of the core shell semiconductor nanoparticle according to the present aspect is preferably from 1 to 20 nm, and more preferably from 1 to 10 nm.

A small amount of elements can be doped as impurities into the above-described constituent material of the semiconductor nanoparticle, if necessary. By adding such a doping material, it is possible to further improve a luminous property.

[Method for manufacturing core shell semiconductor nanoparticle]

For a method for manufacturing a core shell semiconductor nanoparticle, any known method which has been performed conventionally, such as a liquid phase method or a gas phase method, can be used.

Examples of the manufacturing method by the liquid phase method include a coprecipitation method as a precipitation method, a sol-gel method, a homogeneous precipitation method, and a reduction method. Inaddition, areversemicellemethod, a supercritical hydrothermal synthesis method, a hot soap method, and the like are excellent in manufacturing a nanoparticle (for example, refer to JP 2002-322468 A, JP 2005-239775 A, JP 10-310770 A, JP 2000-104058 A, and the like).

Examples of the manufacturing method by the gas phase method include a method of vaporizing raw material semiconductors by a first high temperature plasma generated between electrodes facing each other and making the vaporized semiconductor go into a second high temperature plasma generated by electrodeless discharge in a reduced pressure atmosphere (for example, refer to JP 6-279015 A); a method of separating and removing a nanoparticle from an anode formed of a raw material semiconductor by electrochemical etching (for example, refer to JP 2003-515459 W) ; and a laser ablation method (for example, refer to JP 2004-356163 A) . In addition, a method of subj ecting a rawmaterial gas to a gas phase reaction at a reduced pressure to synthesize a powder containing a particle is preferably used.

As the method for manufacturing the core shell semiconductor nanoparticle, the manufacturing method by the liquid phase method is preferable.

The core shell semiconductor nanoparticle according to the present aspect may contain another component which can be used in a synthesis process, such as a stabilizer, a surfactant, or a solvent, as long as the core shell semiconductor nanoparticle does not impair a function thereof as a fluorescent body.

[Translucent coating layer]

The semiconductor nanoparticle according to the present aspect has a translucent coating layer on a surface of the core shell semiconductor nanoparticle. By having the translucent coating layer, a function of protecting the core shell semiconductor nanoparticle from oxygen outside is further improved. Here, the core shell semiconductor nanoparticle having a translucent coating layer is also simply referred to as a "coated semiconductor nanoparticle".

The thickness of the translucent coating layer is preferably 3 nm or more and 15 nm or less. The thickness of the translucent coating layer of 3 nm or more makes it possible to have a sufficient distance between the core shell semiconductor nanoparticles, and therefore can suppress reduction in luminous efficiency due to fluorescence quenching. On the other hand, for example, the thickness of 15 nm or less makes absorption of light by the translucent coating layer itself difficult, and improves luminous efficiency. The thickness is more preferably from 4 to 12 nm. It is possible to control the thickness of the translucent coating layer by an addition amount of a forming material of the translucent coating layer with respect to the semiconductor nanoparticle, reaction time for forming the translucent coating layer, a concentration of the semiconductor nanoparticle in a reaction solution, and the like. The thickness of the translucent coating layer can be measured by observing an image with a transmission electron microscope (TEM).

The translucent coating layer contains silicon. By containing silicon, a glass-like layer is easily obtained, and heat resistance or oxidation resistance of the coated semiconductor nanoparticle is further improved. A material for forming the translucent coating layer or a forming method will be described in detail in the method for manufacturing the coated semiconductor nanoparticle described below.

<Method for manufacturing coated semiconductor nanoparticle>

A method for manufacturing a coated semiconductor nanoparticle according to an aspect of the present invention

includes a step (hereinafter, also referred to as "step A") of bringing a semiconductor nanoparticle having a core/shell structure into contact with a silane compound in the presence of a specific antioxidant.

[Step A]

In the step A, a semiconductor nanoparticle having a core/shell structure is brought into contact with a silane compound in the presence of a specific antioxidant. The semiconductor nanoparticle having a core/shell structure is similar to the semiconductor nanoparticle described in [Semiconductor nanoparticle] described above. Therefore, detailed description thereof will be omitted here.

[Silane compound]

Here, the "silane compound" means both silicon hydride ($SiH_4$) and an organic silane compound in which a part or all of the hydrogen atoms of silicon hydride is replaced with an organic group. The silane compound is a material for forming the translucent coating layer.

The silane compound is not particularly limited. Examples thereof include tetramethylsilane, trimethoxysilane, triethoxysilane, trimethylmethoxysilane, dimethyldimethoxysilane, methyltrimethoxysilane, trimethylethoxysilane, dimethyldiethoxysilane, methyltriethoxysilane, tetramethoxysilane, tetraethoxysilane (TEOS), hexamethyldisiloxane, hexamethyldisilazane, 1,1-dimethyl-1-silacyclobutane, trimethylvinylsilane, methoxydimethylvinylsilane, trimethoxyvinylsilane, ethyltrimethoxysilane, dimethylvinylsilane, dimethylethoxyethynylsilane, diacetoxydimethylsilane, dimethoxymethyl-3,3,3-trifluoropropylsilane, 3,3,3-trifluoropropyltrimethoxysilane, aryltrimethoxysilane, ethoxydimethylvinylsilane, arylaminotrimethoxysilane, N-methyl-N-trimethylsilylacetamide, 3-aminopropyltrimethoxysilane, methyltrivinylsilane, diacetoxymethylvinylsilane, methyltriacetoxysilane, aryloxydimethylvinylsilane, diethylvinylsilane, butyltrimethoxysilane, 3-aminopropyldimethylethoxysilane, tetravinylsilane, triacetoxyvinylsilane, tetraacetoxysilane, 3-trifluoroacetoxypropyltrimethoxysilane, diaryldimethoxysilane, butyldimethoxyvinylsilane, trimethyl-3-vinylthiopropylsilane, phenyltrimethylsilane, dimethoxymethylphenylsilane, phenyltrimethoxysilane, 3-acryloxypropyldimethoxymethylsilane, 3-acryloxypropyltrimethoxysilane, dimethylisopentyloxyvinylsilane, 2-aryloxyethylthiomethoxytrimethylsilane, 3-glycidoxypropyltrimethoxysilane, 3-arylaminopropyltrimethoxysilane, hexyltrimethoxysilane, heptadecafluorodecyltrimethoxysilane, dimethylethoxyphenylsilane, benzoyloxytrimethylsilane, 3-methacryloxypropyldimethoxymethylsilane, 3-methacryloxypropyltrimethoxylsilane, 3-isocyanatepropyltriethoxysilane, dimethylethoxy-3-glycidoxypropylsilane, dibutoxydimethylsilane, 3-butylaminopropyltrimethylsilane, 3-dimethylaminopropyldiethoxymethylsilane, 2-(2-aminoethylthioethyl)triethoxysilane, bis(butylamino)dimethylsilane, divinylmethylphenylsilane, diacetoxymethylphenylsilane, dimethyl-p-tolylvinylsilane, p-styryltrimethoxysilane, diethylmethylphenylsilane, benzyldimethylethoxysilane, diethoxymethylphenylsilane, decylmethyldimethoxysilane, diethoxy-3-glycidoxypropylmethylsilane, octyloxytrimethylsilane, phenyltrivinylsilane, tetraaryloxysilane, dodecyltrimethylsilane, diarylmethylphenylsilane, diphenylmethylvinylsilane, diphenylethoxymethylsilane, diacetoxydiphenylsilane, dibenzyldimethylsilane, diaryldiphenylsilane, octadecyltrimethylsilane, methyloctadecyldimethylsilane, and docosylmethyldimethylsilane. Among these silane compounds, tetraethoxysilane (TEOS), tetramethoxysilane, and hexamethyldisilazane are preferable from viewpoints of high translucency and easy control of a reaction. Only one kind of these silane compounds may be used singly or a combination of two or more kinds thereof may be used.

[Antioxidant]

In the present aspect, the antioxidant essentially contains at least one kind selected from the group consisting of compounds containing at least one of a phosphor atom and a sulfur atom and no hydroxy group. By bringing a semiconductor nanoparticle into contact with a silane compound in the presence of such an antioxidant having a specific structure, it is possible to improve fluorescence intensity of the coated semiconductor nanoparticle.

In the present aspect, the antioxidant preferably contains at least one kind selected from the group consisting of a phosphite compound (also referred to as phosphorous ester compound; $P(OR)_3$) and a thioether compound (also referred to as sulfide compound; R-S-R).

Preferable examples of the phosphite compound include compounds represented by the following General Formulae 1 to 6.

[Chem. 8]

[General Formula 1]

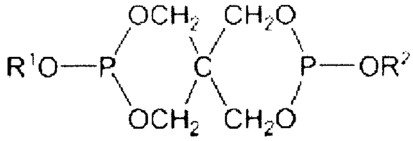

(In the formula, $R^1$ and $R^2$ each independently represent a substituted or unsubstituted alkyl group having 1 to 30 carbon atoms.)

Examples of the above-described substituted or unsubstituted alkyl group having 1 to 30 carbon atoms include a methyl group, an ethyl group, a propyl group, an isopropyl group, a butyl group, a sec-butyl group, a tert-butyl group, an isobutyl group, an amyl group, a tert-amyl group, a hexyl group, a heptyl group, an octyl group, an isooctyl group, a 2-ethylhexyl group, a nonyl group, a decyl group, an undecyl group, a benzyl group, a phenylethyl group, a phenylpropyl group, a cyclohexyl group, a dodecyl group, a tridecyl group, a tetradecyl group, a hexadecyl group, an octadecyl group, an eicosyl group, a docosyl group, a tetracosyl group, and a triacontyl group. Among these groups, an octadecyl group and a hexadecyl group are preferable.

[Chem. 9]

[General Formula 2]

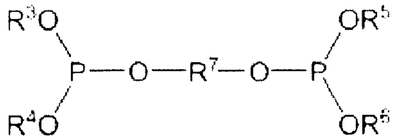

(In the formula, $R^3$, $R^4$, $R^5$, and $R^6$ each independently represent a substituted or unsubstituted alkyl group having 1 to 25 carbon atoms or a substituted or unsubstituted aryl group having 6 to 30 carbon atoms, and $R^7$ represents a substituted or unsubstituted alkylene group having 4 to 33 carbon atoms or a substituted or unsubstituted arylene group having 6 to 40 carbon atoms.)

Examples of the above-described substituted or unsubstituted alkyl group having 1 to 25 carbon atoms include a methyl group, an ethyl group, a butyl group, an octyl group, a decyl group, a lauryl group, a tridecyl group, and a stearyl group. Among these groups, a lauryl group is preferable.

Examples of the above-described substituted or unsubstituted aryl group having 6 to 30 carbon atoms include a phenyl group and a phenyl group replaced with an alkyl group and/or an alkoxy group. Among these groups, a phenyl group, tolyl group, and a xylyl group are preferable.

Examples of the above-described substituted or unsubstituted alkylene group having 4 to 33 carbon atoms include a butylene group and an octylene group. Among these groups, a butylene group is preferable.

Examples of the above-described substituted or unsubstituted arylene group having 6 to 40 carbon atoms include a phenylene group, a diphenylene group, and a group represented by the following General Formula 2A.

[Chem. 10]

[General Formula 2A]

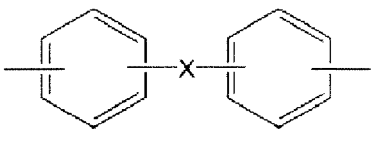

(In the formula, X represents an oxy group, a sulfonyl group, a carbonyl group, a methylene group, an ethylidene group, a butylidene group, an isopropylidene group, or a diazo group.) Among these groups, an isopropylidene group and a methylene group are preferable.

A particularly preferable example of the compound represented by the above-described General Formula 2 is

tetrakis(2,4-di-t-butylphenyl)-4,4'-diphenylene phosphite.

[Chem. 11]

[General Formula 3]

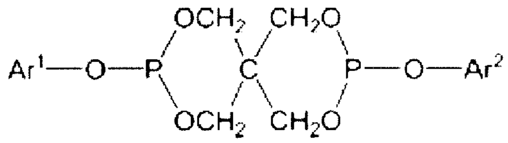

(In the formula, $Ar^1$ and $Ar^2$ each independently represent a substituted or unsubstituted aryl group having 6 to 3 5 carbon atoms.)

Examples of the above-described substituted or unsubstituted aryl group having 6 to 35 carbon atoms include a phenyl group, a naphthyl group, and a diphenyl group replaced with an alkyl group, a hydroxy group, and/or an alkoxy group. Among these groups, a phenyl group and a naphthyl group replaced with an alkyl group are preferable.

Specific examples of the compound represented by the above-described General Formula 3 include bis(2,4-di-t-butylphenyl) pentaerythritol diphosphite, bis(2,6-di-t-butyl-4-methylphenyl)pentaerythritol diphosphite, bis(nonylphenyl)pentaerythritol diphosphite, and 4-phenoxy-9-α-(4-hydroxyphenyl)-p-cumeloxy-3,5,8,10-tetr aoxa-4,9-diphosphaspiro[5,5]undecane. Among these compounds, bis(2,4-di-t-butylphenyl) pentaerythritol diphosphite and bis(2,6-di-t-butyl-4-methylphenyl)pentaerythritol diphosphite are particularly preferable.

[Chem. 12]

[General Formula 4]

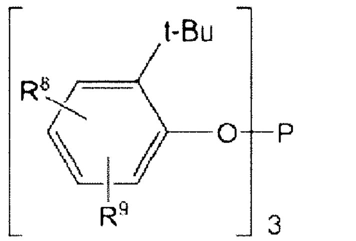

(In the formula, $R^8$ and $R^9$ each independently represent a hydrogen atom or a substituted or unsubstituted alkyl group having 1 to 4 carbon atoms.)

Examples of the above-described substituted or unsubstituted alkyl group having 1 to 4 carbon atoms include a methyl group, an ethyl group, a propyl group, an isopropyl group, a butyl group, a sec-butyl group, a tert-butyl group, and an isobutyl group. Among these groups, a tert-butyl group is preferable.

Specific examples of the compound represented by the above-described General Formula 4 include tris(2-tert-butylphenyl)phosphite, tris(2,4-di-tert-butylphenyl)phosphite, tris(2,5-di-tert-butylphenyl)phosphite, tris(2-tert-butyl-4-methylphenyl)phosphite, tris(2-tert-butyl-5-methylphenyl)phosphite, and tris(2-tert-butyl-4,6-dimethylphenyl)phosphite. Among these compounds, tris(2,4-di-tert-butylphenyl)phosphite is particularly preferable.

[Chem. 13]

[General Formula 5]

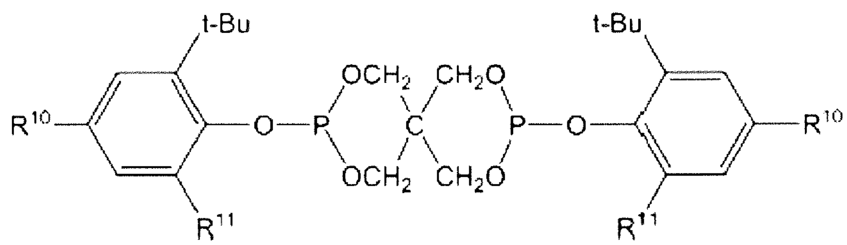

(In the formula, $R^{10}$ and $R^{11}$ each independently represent a hydrogen atom or a substituted or unsubstituted alkyl group having 1 to 4 carbon atoms.)

Examples of the above-described substituted or unsubstituted alkyl group having 1 to 4 carbon atoms include a methyl group, an ethyl group, a propyl group, an isopropyl group, a butyl group, a sec-butyl group, a tert-butyl group, and an isobutyl group. Among these groups, a tert-butyl group is preferable.

Specific examples of the compound represented by the above-described General Formula 5 include bis(2,4-di-tert-butylphenyl)pentaerythritol diphosphite, bis(2,6-di-tert-butylphenyl)pentaerythritol diphosphite, bis(2,6-di-tert-butyl-4-methylphenyl)pentaerythritol diphosphite, bis(2,6-di-tert-butyl-4-ethylphenyl)pentaerythritol diphosphite, bis(2,6-di-tert-butyl-4-isopropylphenyl)pentaerythritol diphosphite, bis(2,4,6-tri-tert-butylphenyl)pentaerythritol diphosphite, bis(2,6-di-tert-butyl-4-sec-butylphenyl)pentaerythritol diphosphite, and bis(2,4-di-tert-butyl-6-methylphenyl)pentaerythritol diphosphite. Among these compounds, bis(2,4-di-t-butylphenyl) pentaerythritol diphosphite, bis(2,6-di-t-butyl-4-methylphenyl)pentaerythritol diphosphite, and bis(2,4,6-tri-tert-butylphenyl)pentaerythritol diphosphite are particularly preferable.

[Chem. 14]

[General Formula 6]

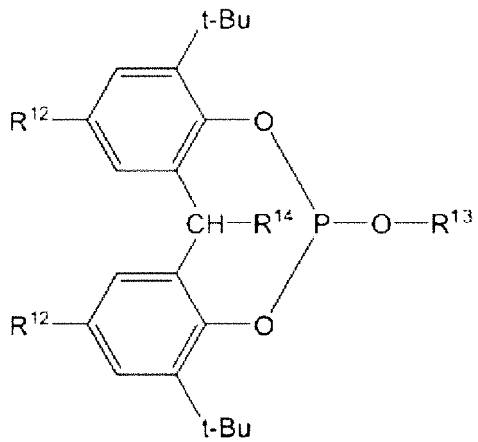

(In the formula, $R^{12}$ and $R^{14}$ each independently represent a hydrogen atom or a substituted or unsubstituted alkyl group having 1 to 4 carbon atoms. $R^{13}$ represents a substituted or unsubstituted alkyl group having 1 to 18 carbon atoms.)

Examples of the above-described substituted or unsubstituted alkyl group having 1 to 4 carbon atoms include a methyl group, an ethyl group, a propyl group, an isopropyl group, a butyl group, a sec-butyl group, a tert-butyl group, and an isobutyl group. Among these groups, a tert-butyl group is preferable.

Examples of the-described substituted or unsubstituted alkyl group having 1 to 18 carbon atoms include a methyl group, an ethyl group, a propyl group, an isopropyl group, a butyl group, a sec-butyl group, a tert-butyl group, an isobutyl group, an amyl group, an isoamyl group, a tert-amyl group, a hexyl group, a heptyl group, a 2-heptyl group, an isoheptyl group, a tert-heptyl group, an n-octyl group, an isooctyl group, a tert-octyl group, a 2-ethylhexyl group, anonyl group, an isononyl group, a decyl group, an undecyl group, a dodecyl group, a tridecyl group, a tetradecyl group, a pentadecyl group, a hexadecyl group, a heptadecyl group, an octadecyl group, a chloromethyl group, a dichloromethyl group, a trichloromethyl group, a 2-hydroxyethyl group, a 2-hydroxypropyl group, 3-hydroxypropyl group, a 2-methoxyethyl group, a 2-ethoxyethyl group, 2-butoxyethyl group, a 2-methoxypropyl group, a 3-methoxypropyl group, a 2,3-dihydroxypropyl group, a 2-hydroxy-3-methoxypropyl group, a 2,3-dimethoxypropyl group, and a 2-(2-methoxyethoxy)ethyl group. Among these groups, a 2-ethylhexyl group is preferable.

Preferable specific examples of the phosphite compound include compounds represented by the following Chemical Formulae P1 to P10.

[Chem. 15]

[Chemical Formula P1]

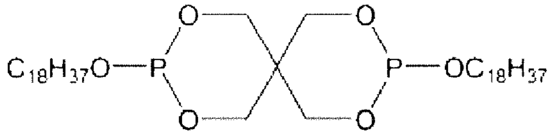

[Chemical Formula P2]

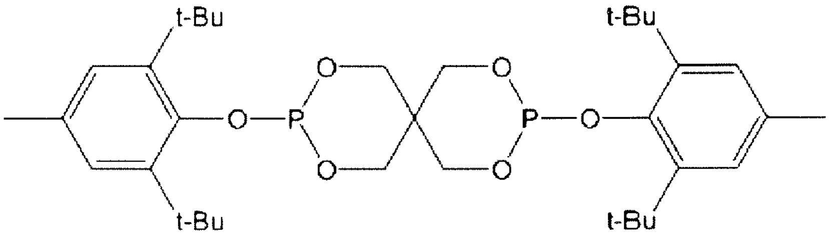

[Chemical Formula P3]

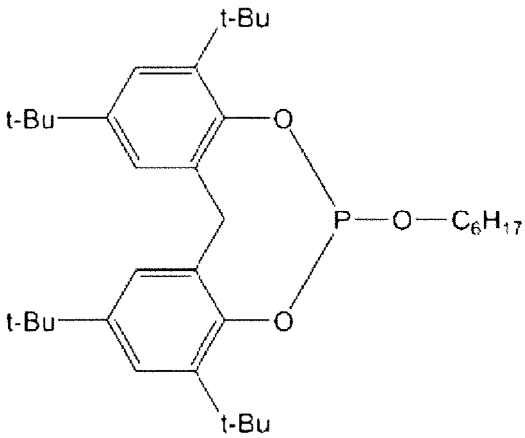

[Chemical Formula P4]

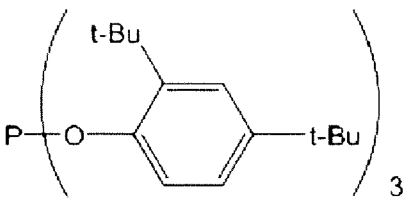

[Chemical Formula P5]

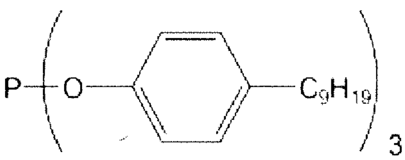

[Chemical Formula P6]

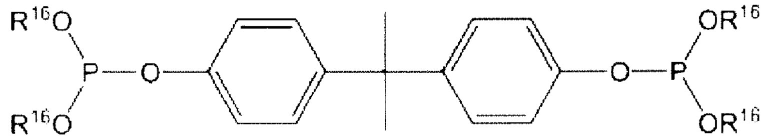

$R^{16}$: alkyl group having 12 to 15 carbon atoms

[Chem. 16]

[Chemical Formula P7]

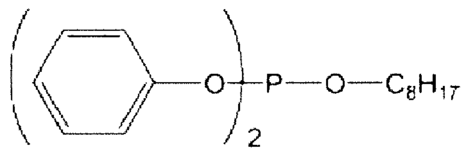

[Chemical Formula P8]

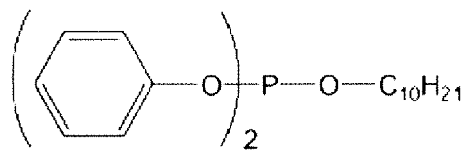

[Chemical Formula P9]

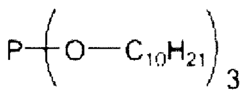

[Chemical Formula P10]

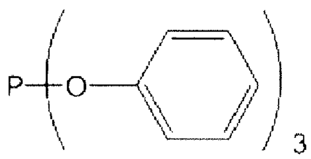

The compounds represented by the above-described Chemical Formulae P1 to P10 are commercially available as PEP-8 (above-described Chemical Formula P1), PEP-36 (above-described Chemical Formula P2), HP-10 (above-described ChemicalFormula P3),2112 (above-described Chemical Formula P4), 1178 (above-described Chemical Formula P5), 1500 (above-described Chemical Formula P6), C (above-described Chemical Formula P7), 135A (above-described Chemical Formula P8), 3010 (above-described Chemical Formula P9), and TPP (above-described Chemical Formula P10), which are phosphite ant ioxidants manufactured by ADEKA Corporation.

Preferable specific examples of the thioether compound include compounds represented by the following Chemical Formulae S1 and S2.

[Chem. 17]

[Chemical Formula S1]

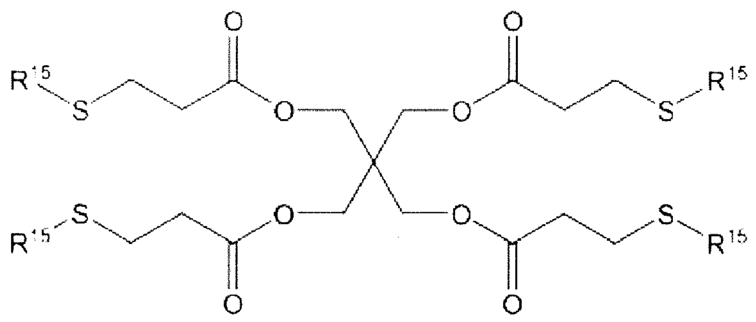

$R^{15}$: alkyl group having 12 carbon atoms

[Chemical Formula S2]

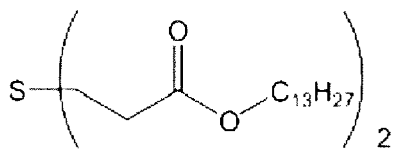

The compounds represented by the above-described Chemical Formulae S1 and S2 are commercially available as AO-412S (above-described Chemical Formula S1) and AO-503 (above-described Chemical Formula S2), which are thioether antioxidants manufactured by ADEKA Corporation.

Only one kind of these antioxidants may be used singly or a combination of two or more kinds thereof may be used.

In the step A, the method of bringing a semiconductor nanoparticle having a core/shell structure into contact with a silane compound in the presence of a specific antioxidant to perform a silane treatment on a surface of the semiconductor nanoparticle is not particularly limited. An antioxidant is only required to be present in a dispersion medium in which the semiconductor nanoparticles are dispersed before or at the same time as the contact between the semiconductor nanoparticle and the silane compound. Examples thereof include (1) a method of mixing a mixed liquid obtained by adding an antioxidant to a dispersion of a semiconductor nanoparticle and a silane compound; and (2) a method of mixing a dispersion of a semiconductor nanoparticle and a silane compound solution obtained by adding an antioxidant thereto.

A dispersion medium for dispersing a semiconductor nanoparticle, a solvent for dissolving a silane compound, and the like are not particularly limited. A known dispersion medium or solvent used in the present technical field can be used appropriately. Examples thereof include a hydrocarbon solvent such as an aliphatic hydrocarbon, an alicyclic hydrocarbon, an aromatic hydrocarbon, or a halogenated hydrocarbon; and an ether solvent such as an aliphatic ether or an alicyclic ether. More specific examples of the hydrocarbon solvent include pentane, hexane, cyclohexane, toluene, xylene, Solvesso, terpene, methylene chloride, and trichloro ethane. Examples of the ether solvent include dibutyl ether, dioxane, and tetrahydrofuran. Among these solvents, cyclohexane and toluene are preferable from a viewpoint of dispersibility of a semiconductor nanoparticle. Only one kind of these dispersion media or solvents may be used singly or a combination of two or more kinds thereof may be used.

An addition amount of the antioxidant is not particularly limited, but is preferably from 0.1 to200mol%, more preferably from 0.5 to 100 mol%, and still more preferably from 1 to 100 mol% with respect to one mol of the semiconductor nanoparticle. The addition amount of the antioxidant of 0.1 mol% or more is preferable because active oxygen is stabilized near the particles. On the other hand, the addition amount of 200 mol% or less is preferable because coordination of a silane compound to the surface of the particle is not obstructed.

An addition amount of the silane compound is not particularly limited, but knowledge known in the present technical field can be used appropriately. However, the addition amount is preferably from 0.5 to 10 parts by mass, and more preferably from 1 to 5 parts by mass, with respect to 100 parts by mass of the semiconductor nanoparticle. The addition amount of the silane compound of 0.5 parts by mass or more is preferable because the surface of the particle can be coated sufficiently. On the other hand, the addition amount of 10 parts by mass or less is preferable because the coating layer does not become thick excessively, and does not impair emission intensity.

Time required for performing a silane treatment on the surface of the semiconductor nanoparticle is not particularly limited. However, the semiconductor nanoparticle, the antioxidant, and the silane compound are reacted in a

dispersion medium or a solvent preferably for 10 to 40 hours, and more preferably for 20 to 40 hours. The reaction time of 10 hours or more is preferable because an organic ligand coordinated to the surface of the semiconductor nanoparticle can be replaced with a silane compound sufficiently. On the other hand, the reaction time of 40 hours or less is preferable because a particle to which a silane compound is coordinated does not start to be agglomerated. The reaction is preferably performed while a mixed liquid containing the semiconductor nanoparticle, the antioxidant, and the silane compound are stirred.

The reaction temperature of the silanization reaction is not particularly limited, but is preferably from 20 to 80°C, and more preferably from 20 to 40°C. The reaction temperature of 20°C or higher is preferable because a substitution reaction between an organic ligand coordinated to the surface of the semiconductor nanoparticle and a silane compound proceeds. On the other hand, the reaction temperature of 80°C or lower is preferable because a rapid substitution reaction does not occur and particles are not agglomerated.

In the manufacturing method according to the presentaspect, it is preferable to form a translucent coating layer on the surface of the semiconductor nanoparticle by hydrolyzing the silane compound on the surface of the semiconductor nanoparticle, obtained by the above-described step A, in the following step B. That is, a preferable form of the method for manufacturing a coated semiconductor nanoparticle according to the present aspect includes the step B of hydrolyzing the silane compound on the surface of the semiconductor nanoparticle, obtained by the above-described step A, after the step A.

The method of hydrolyzing the silane compound on the surface of the semiconductor nanoparticle is not particularly limited. Examples thereof include a method of hydrolyzing the silane compound in the presence of water and a hydrolysis catalyst.

For the hydrolysis catalyst used here, a known acid or base used in the present technical field can be used appropriately. Examples of the acid catalyst include acetic acid, trichloroacetic acid, and hydrochloric acid. Examples of the base catalyst include ammonia water, ethylene diamine, and urea. Among these catalysts, a weak base and a weak acid such as ammonia water or acetic acid are preferable because rapid hydrolysis gives a large damage to the semiconductor nanoparticle. Only one kind of these hydrolysis catalysts may be used singly or a combination of two or more kinds thereof may be used. A use amount of the hydrolysis catalyst is not particularly limited, but is usually about from 5 to 50 parts by mass with respect to 100 parts bymass of the silane compound.

When the hydrolysis reaction is performed, a surfactant is preferably present in a reaction system from a viewpoint of improving a reaction efficiency. The surfactant used at this time is not particularly limited. Either an ionic surfactant (cationic surfactant, anionic surfactant, amphoteric surfactant) or a nonionic surfactant can be used. Among these surfactants, a nonionic surfactant such as polyoxyethylene nonylphenyl ether or octylphenyl-polyethylene glycol of IGEPAL (registered trademark) series (for example, CO-520, CA-630) or the like is preferably used from a viewpoint of obtaining also an effect as a dispersing agent. A use amount of the surfactant is not particularly limited, but is usually about from 1 to 20 parts by mass with respect to 100 parts by mass of a reaction solution.

In the hydrolysis reaction, a silane compound is preferably further added to a reaction system from a viewpoint of adjusting a thickness or a density of the translucent coating layer. The silane compound added at this time may be the same as or different from the silane compound used in the above-described step A.

The reaction temperature and reaction time of the hydrolysis reaction are not particularly limited, but are usually from 20 to 40°C and about 12 to 48 hours. By subj ecting the reaction solution to solid-liquid separation by centrifugation or the like and washing after the reaction is terminated, it is possible to obtain a coated semiconductor nanoparticle in which the surface of the semiconductor nanoparticle is coated with the translucent coating layer.

<Semiconductor nanoparticle aggregate>

A coated semiconductor nanoparticle obtained by the above-described manufacturing method according to an aspect of the present invention can be used as an aggregate containing an agglomerate in which the plurality of particles is agglomerated. That is, according to another aspect of the present invention, a semiconductor nanoparticle aggregate containing an agglomerate in which the above-described plurality of coated semiconductor nanoparticle is agglomerated is provided.

Fig. 2 is a schematic cross sectional view illustrating a typical structure of the semiconductor nanoparticle aggregate according to an embodiment of the present invention. A semiconductor nanoparticle aggregate 20 includes an agglomerate in which a plurality of coated semiconductor nanoparticles 10 is agglomerated. The coated semiconductor nanoparticle 10 contains a semiconductor nanoparticle 13 containing a core part 11 and a shell part 12 and a translucent coating layer 14 coating the semiconductor nanoparticle 13. The semiconductor nanoparticle aggregate 20 illustrated in Fig. 2 has a matrix 15 for making the aggregation between the coated semiconductor nanoparticles 10 firmer. However, the semiconductor nanoparticle aggregate 20 does not necessarily have the matrix 15.

The semiconductor nanoparticle aggregate according to the present aspect is a particle containing an agglomerate in which the above-described plurality of coated semiconductor nanoparticles is agglomerated while being in

contact with each other. This semiconductor nanoparticle aggregate acts as a fluorescent body.

Only one kind of the coated semiconductor nanoparticle or a combination of two or more different kinds thereof may constitute the semiconductor nanoparticle aggregate. Here, it is assumed that all the combinations of two or more kinds of coated semiconductor nanoparticles in which at least one of a forming material of the core part, a particle diameter of the core part, a forming material of the shell part, a thickness of the shell part, a particle diameter of the core shell semiconductor nanoparticle, a forming material of the translucent coating layer, and a thickness of the translucent coating layer is different are included in the semiconductor nanoparticle aggregate in which two or more different kinds of coated semiconductor nanoparticles are combined.

The semiconductor nanoparticle aggregate according to the present aspect may be an aggregate containing an agglomerate in which the above-described plurality of coated semiconductor nanoparticles is agglomerated with each other by themselves. However, the semiconductor nanoparticle aggregate is preferably an aggregate containing an agglomerate in which the plurality of coated semiconductor nanoparticles is agglomerated with each other via a matrix from a viewpoint of making the aggregation between the coated semiconductor nanoparticles in the semiconductor nanoparticle aggregate firmer. That is, the semiconductor nanoparticle aggregate according to an aspect of the present invention preferably further contains a matrix coating the entire agglomerate.

Here, a material used for forming the matrix is not particularly limited as long as the material can coat the agglomerate of the coated semiconductor nanoparticles. Either an inorganic substance or an organic substance can be used. The matrix preferably contains a silicon-containing material or a polymer material from a viewpoint of luminous efficiency and manufacturing the agglomerate easily.

Examples of the polymer material include an amphipathic polymer such as polymaleic anhydride-alt-1-octadecene (maleic anhydride-1-octadecene alternating copolymer), styrene-maleic anhydride copolymer, polylactic acid obtained by combining polyethylene glycol (PEG), lactic acid-glycolic acid copolymer obtained by combining PEG, or polyoxyethylene polyoxypropylene; and a hydrophilic polymer such as gelatin, guar gum, carboxymethyl cellulose, pectin, karaya gum, polyvinyl alcohol, polyvinyl pyrrolidone, polyacrylic acid, a styrene-acrylic acid copolymer, or a vinyl acetate copolymer. Examples of the silicon-containing material include a silicon compound such as a silane compound exemplified as the above-described forming material of the translucent coating layer, perhydropolysilazane (PHPS), organopolysilazane, silsesquioxane, 1,3-divinyl-1,1,3,3-tetramethyldisiloxane, 1,3-divinyl-1,1,3,3-tetramethyldisilazane, 1,3-bis(3-acetoxypropyl)tetramethyldisiloxane, 1,3,5-trimethyl-1,3,5-trivinylcyclotrisiloxane, 1,3,5-tris(3,3,3-trifluoropropyl)-1,3,5-trimethylcyclotr isiloxane, octamethylcyclotetrasiloxane, 1,3,5,7-tetraethoxy-1,3,5,7-tetramethylcyclotetrasiloxan e, or decamethylcyclopentasiloxane. One kind of these forming materials of the matrix may be used singly or a combination of two or more kinds thereof may be used.

Among these forming materials of the matrix, polymaleic anhydride-alt-1-octadecene, a polysilazane (perhydropolysilazane (PHPS), organopolysilazane), tetraethoxysilane (TEOS), hexamethyldisilazane (HMDS), and the like are preferable.

The polysilazane means a polymer compound having silazane bonds and having Si-N bonds in a molecule. Specifically, the polysilazane has bonds such as Si-N, Si-H, or N-H in the structure thereof, and is an inorganic polymer precursor of ceramic such as $SiO_2$, $Si_3N_4$, or $SiO_xN_y$ which is an intermediate solid solution thereof.

The usable polysilazane is not particularly limited. However, a preferable example thereof is a compound having a main skeleton formed of a unit represented by the following General Formula (I).

[Chem. 18]

General Formula (I)

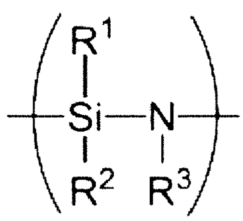

In the above-described General Formula (I), $R^1$, $R^2$, and $R^3$ each independently represent a hydrogen atom, an alkyl group, an alkenyl group, a cycloalkyl group, an aryl group, an alkylsilyl group, an alkylamino group, or an alkoxy group.

The polysilazane is preferably a perhydropolysilazane (PHPS) in which $R^1$, $R^2$, and $R^3$ are all hydrogen atoms.

The perhydropolysilazane is estimated to have a linear structure and a ring structure mainly containing a six-membered ring and an eight-membered ring. The number average molecular weight (Mn) thereof is about from 600 to

2000 (in terms of polystyrene). The perhydropolysilazane can be liquid or solid depending on the molecular weight thereof. For the perhydropolysilazane, a synthetic product or a commercially available product may be used.

Other examples of the polysilazane include silicon alkoxide-added polysilazane obtained by reacting a silicon alkoxide to the polysilazane represented by the above-described General Formula (I) (for example, JP 5-238827 A),glycidol-added polysilazane obtained by reacting glycidol (for example, JP 6-122852 A), alcohol-added polysilazane obtained by reacting an alcohol (for example, JP 6-240208 A),metalcarboxylate-added polysilazane obtained by reacting a metal carboxylate (for example, JP 6-299118 A), acetylacetonato complex-added polysilazane obtained by reacting an acetylacetonato complex containing a metal (for example, JP 6-306329 A), and metal fine particle-added polysilazane obtained by adding fine metal particles (for example, JP 7-196986 A).

The above-described polysilazane by itself can be used as a material of a matrix. However, it is preferable to modify the polysilazane as described below. The modification means a reaction for converting a part or the whole of the polysilazane into silicon oxide, silicon nitride, silicon oxynitride, or the like. The modification is performed by at least one of a heat treatment, an ultraviolet irradiation treatment, and a plasma treatment. By performing the modification, a glassy property of the matrix is further improved, and heat resistance and oxidation resistance of the semiconductor nanoparticle aggregate is further improved. Conditions of the modification will be described in detail below.

The semiconductor nanoparticle aggregate according to the present aspect may contain another component which can be used in a synthesis process, such as a stabilizer, a surfactant, a solvent, or a catalyst, as long as the semiconductor nanoparticle aggregate does not impair a function thereof as a fluorescent body.

<Method for manufacturing semiconductor nanoparticle aggregate>

The semiconductor nanoparticle aggregate according to the present aspect can be obtained by agglomerating the above-described plurality of coated semiconductor nanoparticles by an appropriate method to form an agglomerate. In this case, an agglomerate in which the above-described coated semiconductor nanoparticles are in contact with each other may be used as a semiconductor nanoparticle aggregate as it is without forming a matrix. However, it is preferable to further form a matrix coating the entire agglomerate by a method such as a liquid phase method after a plurality of coated semiconductor nanoparticles is agglomerated to form the agglomerate, from a viewpoint of obtaining a firmer aggregate.

A method for manufacturing an aggregate by agglomerating coated semiconductor nanoparticles without forming a matrix is not particularly limited. However, for example, the coated semiconductor nanoparticles are stirred and mixed in a poor solvent in which the coated semiconductor nanoparticles are not dissolved. Examples of the poor solvent include analcohol (methanol, ethanol, propanol, or the like) and a ketone (acetone, methylethyl ketone, or the like). The temperature at the time of mixing is preferably from 20 to 80°C. The mixing time is preferably from 10 to 40 hours.

As a method for manufacturing an agglomerate by forming a matrix and agglomerating coated semiconductor nanoparticles, for example, coated semiconductor nanoparticles and forming materials of the matrix are reacted in a solvent.

Examples the above-described usable solvent include water; a hydrocarbon solvent such as an aliphatic hydrocarbon, an alicyclic hydrocarbon, an aromatic hydrocarbon, or a halogenated hydrocarbon; an ether solvent such as an aliphatic ether or an alicyclic ether; and a polar solvent. More specific examples of the hydrocarbon solvent include pentane, hexane, cyclohexane, toluene, xylene, Solvesso, terpene, methylene chloride, and trichloro ethane. Examples of the ether solvent include dibutyl ether, dioxane, and tetrahydrofuran (THF). Examples of the polar solvent include N,N-dimethylformamide (DMF) and dimethyl sulfoxide (DMSO). One kind of these solvents can be used singly, or a mixture of two or more kinds thereof can be used.

A use amount of a forming material of the matrix with respect to the coated semiconductor nanoparticle is preferably from 0.5 to 10 parts by mass with respect to 100 parts by mass of the coated semiconductor nanoparticle. The reaction temperature is not particularly limited, but is preferably from 20 to 80°C, and more preferably from 25 to 40°C. The reaction time is not particularly limited, but is preferably from 1 to 300 hours, and more preferably from 10 to 200 hours.

A surfactant such as polyoxyethylene nonylethyl ether, a catalyst hydrolyzing a forming material of the matrix such as ammonia, or the like may be further added to a reaction system, if necessary.

When a polysilazane is used as a forming material of the matrix, the polysilazane can be further modified to obtain a matrix. The modification means a reaction for converting a part or the whole of the polysilazane into silicon oxide, silicon nitride, silicon oxynitride, or the like, as described above. The modification is performed by at least one of a heat treatment, an ultraviolet irradiation treatment, and a plasma treatment. Hereinafter, an ultraviolet irradiation treatment as a preferable modification treatment will be described.

Here, in general, the "ultraviolet ray" means an electromagnetic wave having a wavelength of 10 to 400 nm. A vacuum ultraviolet ray having a wavelength of 10 to 200 nm is preferably used from a viewpoint of performing the modification efficiently.

Examples of a means for generating such an ultraviolet ray include a metal halide lamp, a high pressure mercury lamp, a low pressure mercury lamp, a xenon-arc lamp, a carbon-arc lamp, an excimer lamp (single wavelength of 172 nm, 222 nm, or 308 nm, for example, manufactured by USHIO INC. or M.D. COM INC.), and a UV light laser. However, the means is not particularly limited.

Hereinafter, a vacuum ultraviolet irradiation treatment (excimer irradiation treatment) as the most preferable modification in the method for manufacturing a semiconductor nanoparticle aggregate according to the present aspect will be described in detail.

(Vacuum ultraviolet irradiation treatment: excimer irradiation treatment)

By irradiation with a vacuum ultraviolet ray, a polysilazane is directly oxidized without becoming silanol (actionofaphoton, referredtoasphotonprocess). Therefore, the volume does not change largely in the oxidation process, and it is possible to obtain a translucent coating layer containing silicon oxide, siliconnitride, silicon oxynitride, or the like and having a high density and few defects. Therefore, a matrix obtained by modifying a polysilazane by the vacuum ultraviolet irradiation treatment can have a high oxygen barrier property.

As a light source of a vacuum ultraviolet ray, an excimer lamp of a noble gas such as Xe, Kr, Ar, or Ne is preferably used. Among these lamps, the Xe excimer lamp emits an ultraviolet ray of a short wavelength of 172 nm at a single wavelength, and therefore has excellent luminous efficiency. This light has a large absorption coefficient of oxygen, and therefore can generate radical oxygen atomic species or ozone at a high concentration with a small amount of oxygen. It is known that energy of light having a short wavelength of 172 nm has a high ability to dissociate a bond of an organic substance. The polysilazane can be modified in a short time due to a high energy of this active oxygen, ozone, or irradiation with a ultraviolet ray.

In the vacuum ultraviolet irradiation, the irradiation intensity of a light source used is preferably from 0.01 to 2.0 $mW/cm^2$, and more preferably from 0.1 to 1.0 $mW/cm^2$. The irradiation intensity within this range enhances a modification efficiency sufficiently.

The irradiation energy amount (accumulated amount) of the vacuum ultraviolet ray is preferably from 0.1 to 2000 $J/cm^2$, and more preferably from 1.0 to 1000 $J/cm^2$. The irradiation energy amount within this range makes the modification efficient.

An atmosphere during the ultraviolet irradiation is not particularly limited. Examples thereof include an inert gas atmosphere.

The average volume particle diameter of the semiconductor nanoparticle aggregate is preferably from 50 to 1500 nm, more preferably from 70 to 1300 nm, and still more preferably from 100 to 1000 nm. The average particle diameter within this range can further improve luminous efficiency. The average volume particle diameter can be controlled by controlling mixing (reaction) time when the coated semiconductor nanoparticle are aggregated, an addition amount of a forming material of the matrix with respect to the coated semiconductor nanoparticle, a mixing ratio of the surfactant or the like, a concentration of the coated semiconductor nanoparticle in a reaction solution, or the like. The average volume particle diameter can be measured by a method in conformity with a method for measuring an average volume particle diameter of the semiconductor nanoparticle.

[Application]

For example, the semiconductor nanoparticle aggregate according to the present aspect is used suitably for forming materials of a wavelength conversion layer contained in a wavelength conversion element included in a solar cell, a backlight for a liquid crystal display device, a color wheel, a white LED, and an optical communication device, or the like; a sealing material of a light emitting device; or a photoelectric conversion material.

The semiconductor nanoparticle aggregate according to the present aspect preferably has a matrix for agglomerating the coated semiconductor nanoparticles more firmly. However, regardless of the presence of the matrix, the semiconductor nanoparticle aggregate can be processed into a film-shape or a sheet-shape easily by mixing the semiconductor nanoparticle aggregate with a resin binder or the like, and can be used suitably for various fields in addition to those described above.

Examples of a method for processing the semiconductor nanoparticle aggregate into a film-shape or a sheet-shape include a method of coating a semiconductor nanoparticle aggregate dispersed in a resin binder such as an ultraviolet ray-curable resin or a thermosetting resin on a substrate and drying the semiconductor nanoparticle aggregate if necessary; and a method of dispersing a semiconductor nanoparticle aggregate directly in a substrate raw material and then forming a film.

As the substrate, a substrate having translucency is used. Preferable examples of the material include glass, quartz, and a resin film. A resin film which can impart flexibility to a film or a sheet is particularly preferable.

Examples of the resin film include a film containing a resin such as a polyester such as polyethylene terephthalate (PET) or polyethylene naphthalate (PEN); polyethylene; polypropylene; a cellulose ester or a derivative thereof such as cellophane, cellulose diacetate, cellulose triacetate (TAC), cellulose acetate butyrate, cellulose acetate propionate (CAP),

cellulose acetate phthalate, or cellulose nitrate; polyvinylidene chloride; polyvinyl alcohol; polyethylene vinyl alcohol (ethylene-vinyl alcohol copolymer); syndiotactic polystyrene; polycarbonate; a norbornene resin; polymethyl pentene; polyether ketone; polyimide; polyether sulfone (PES); polyphenylene sulfide; polysulfone; polyether imide; polyetherketone imide; polyamide; a fluorocarbon polymer; nylon (registered trademark); polymethyl methacrylate; an acrylate; or a polyarylate, and a cycloolefin resin film such as Arton (registered trademark, manufactured by JSR Corporation) or Apel (registered trademark, manufactured by Mitsui Chemicals, Inc.).

[Examples]

Hereinafter, the present invention will be described using Examples and Comparative Examples. However, the present invention is not limited to the following Examples. Unless otherwise specified, operations and measurement of physical properties or the like were performed under the conditions of room temperature (20 to 25°C) /relative humidity of 40 to 50%RH.

<Manufacturing coated semiconductor nanoparticle>

[Example 1]

0.5 mL of InP/ZnS (indium phosphide/zinc sulfide) CoreShell Nanocrystals (manufactured by NN Labs. LLC: type "INP530-100") as a semiconductor nanoparticle having a core/shell structure (particle content: 0.5 mg, organic ligand: oleylamine), 500 μL of cyclohexane, 5 μL of tetraethoxysilane (TEOS, manufactured by Sigma-Aldrich Co. LLC.) , and 0.1 mol% of a phosphite antioxidant C (manufactured by ADEKA Corporation) as an antioxidant with respect to 1 mol of the semiconductor nanoparticle were mixed and stirred at room temperature (25°C) for 20 hours to perform a silane treatment on a surface of the particle.

Separately, 1 g of IGEPAL (registered trademark) CO-520 (polyoxyethylene nonylphenyl ether) as a surfactant was added to 10 mL of cyclohexane. Thereafter, the resulting liquid was stirreduntil the liquidbecame transparent. To this mixed liquid, the above-described dispersion of the silane-treated InP/ZnS particles was added, and 50 μL of a 28% by mass ammonia solution was further added. Thereafter, 30 μL of TEOS was additionally added. The resulting mixture wasstirred atroom temperature for 20 hours to perform a reaction.

After the reaction was terminated, the reaction solution was subjected to solid-liquid separation by centrifugation, and washing and centrifugation were repeated three times. Thereafter, the coated semiconductor nanoparticles were dispersed in toluene such that the concentration of the coated semiconductor nanoparticle was 5. $5 \times 10^{-7}$ M to obtain a coated semiconductor nanoparticle dispersion (thickness of translucent coating layer: 8 nm).

[Example 2]

A coated semiconductor nanoparticle dispersion was obtained by performing a similar operation to that in Example 1 except that the addition amount of the phosphite antioxidant C (manufactured by ADEKA Corporation) was 1 mol% with respect to 1 mol of the semiconductor nanoparticle.

[Example 3]

A coated semiconductor nanoparticle dispersion was obtained by performing a similar operation to that in Example 1 except that the addition amount of the phosphite antioxidant C (manufactured by ADEKA Corporation) was 10 mol% with respect to 1 mol of the semiconductor nanoparticle.

[Example 4]

A coated semiconductor nanoparticle dispersion was obtained by performing a similar operation to that in Example 1 except that PEP-36 (manufactured by ADEKA Corporation) was used as an antioxidant.

[Example 5]

A coated semiconductor nanoparticle dispersion was obtained by performing a similar operation to that in Example 4 except that the addition amount of PEP-36 (manufactured by ADEKA Corporation) was 10 mol% with respect to 1 mol of the semiconductor nanoparticle.

[Example 6]

A coated semiconductor nanoparticle dispersion was obtained by performing a similar operation to that in Example 4 except that the addition amount of PEP-36 (manufactured by ADEKA Corporation) was 100 mol% with respect to 1 mol of the semiconductor nanoparticle.

[Example 7]

A coated semiconductor nanoparticle dispersion was obtained by performing a similar operation to that in Example 4 except that the addition amount of PEP-36 (manufactured by ADEKA Corporation) was 200 mol% with respect to 1 mol of the semiconductor nanoparticle.

[Example 8]

A coated semiconductor nanoparticle dispersion was obtained by performing a similar operation to that in Example 1 except that a thioether antioxidant AO-412S (manufactured by ADEKA Corporation) was used as an antioxidant.

[Example 9]

A coated semiconductor nanoparticle dispersion was obtained by performing a similar operation to that in Example 8 except that the addition amount of the thioether antioxidant AO-412S (manufactured by ADEKA Corporation) was 10 mol% with respect to 1 mol of the semiconductor nanoparticle.

[Example 10]

A coated semiconductor nanoparticle dispersion was obtained by performing a similar operation to that in Example 8 except that the addition amount of the thioether antioxidant AO-412S (manufactured by ADEKA Corporation) was 100 mol% with respect to 1 mol of the semiconductor nanoparticle.

[Example 11]

A coated semiconductor nanoparticle dispersion was obtained by performing a similar operation to that in Example 8 except that the addition amount of the thioether antioxidant AO-412S (manufactured by ADEKA Corporation) was 200 mol% with respect to 1 mol of the semiconductor nanoparticle.

[Comparative Example 1]

A semiconductor nanoparticle dispersion was obtained by dispersing the semiconductor nanoparticles described in Example 1 themselves in toluene without performing a coating treatment such that the concentration thereof was $5.5 \times 10^{-7}$ M.

[Comparative Example 2]

A coated semiconductor nanoparticle dispersion was obtained by performing a similar operation to that in Example 1 except that no antioxidant was added.

<Evaluation>

Maximum fluorescence intensity of each of the dispersions obtained in Examples and Comparative Examples was measured before and after light irradiation. First, maximum fluorescence intensity before light irradiation was measured. The measurement was performed at an excitation wavelength of 400 nm and a photomultiplier of 700 V using a spectrofluoro-photometer (manufactured by Hitachi High-Tech Science Corporation, product name "F-4500").

Subsequently, each dispersion was irradiated with light at 8 $W/m^2$ (450 nm) at room temperature for 30 minutes. Maximum fluorescence intensity immediately after the light irradiation was measured under the same conditions as those before the light irradiation.

Results are shown in Table 1.

[Table 1]

| | Antioxidant | | Maximum fluorescence intensity [a.u.] | | Notes |
|---|---|---|---|---|---|
| | Type | Addition amount [mol%] | Before light irradiation | After light irradiation | |
| Comparative Example 1 | - | - | 8500 | 3000 | Without coating treatment |
| Comparative Example 2 | - | - | 5000 | 4000 | Without adding antioxidant |
| Example 1 | C | 0.1 | 10000 | 9800 | |
| Example 2 | C | 1 | 9900 | 9800 | |
| Example 3 | C | 10 | 9500 | 9000 | |
| Example 4 | PEP-36 | 0.1 | 9800 | 9110 | |
| Example 5 | PEP-36 | 10 | 9900 | 9500 | |
| Example 6 | PEP-36 | 100 | 10000 | 9800 | |
| Example 7 | PEP-36 | 200 | 9800 | 9300 | |
| Example 8 | AO-4125 | 0.1 | 9400 | 7990 | |
| Example 9 | AO-4125 | 10 | 9500 | 8300 | |
| Example 10 | AO-412S | 100 | 9600 | 8000 | |
| Example 11 | AO-4125 | 200 | 9000 | 7800 | |

As shown in Table 1, before the light irradiation, the maximum fluorescence intensity in Comparative Example 2 was lower than that in Comparative Example 1. This result suggests that the fluorescence intensity inherent in the semiconductor nanoparticle is reduced by a coating treatment in the absence of an antioxidant. After the light irradiation, the maximum fluorescence intensity in Comparative Example 2 was higher than that in Comparative Example 1. This result suggests that, in the coated semiconductor nanoparticle, reduction in fluorescence intensity by light irradiation is suppressed.

Meanwhile, the maximum fluorescence intensities in Examples 1 to 11 in the present invention were significantly higher than those in Comparative Example 2 before and after light irradiation. This result suggests that the fluorescence intensity inherent in the semiconductor nanoparticle is maintained or improved, and light deterioration of the coated semiconductor nanoparticle is suppressed by bringing the semiconductor nanoparticle into contact with the silane compound in the presence of an antioxidant in the coating treatment.

Reference Signs List

10 coated semiconductor nanoparticle
11 core part
12 shell part
13 semiconductor nanoparticle
14 translucent coating layer
15 matrix
20 semiconductor nanoparticle aggregate

## Claims

**1.** A method for manufacturing a coated semiconductor nanoparticle containing a semiconductor nanoparticle having

a core/shell structure and a translucent coating layer containing silicon coating the semiconductor nanoparticle, comprising
a step of bringing the semiconductor nanoparticle into contact with a silane compound in the presence of anantioxidant, wherein
the antioxidant contains at least one kind selected from the group consisting of compounds containing at least one of a phosphor atom and a sulfur atom and no hydroxy group.

**2.** The method for manufacturing a coated semiconductor nanoparticle according to claim 1, wherein the antioxidant contains at least one kind selected from the group consisting of a phosphite compound and a thioether compound.

**3.** The method for manufacturing a coated semiconductor nanoparticle according to claim 1 or 2 , wherein the antioxidant contains at least one kind selected from the group consisting of compounds represented by the following General Formulae 1 to 6 and the Chemical Formulae S1 and S2. [Chem. 1]

[General Formula 1]

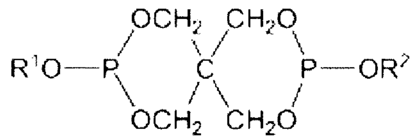

(In the formula, $R^1$ and $R^2$ each independently represent a substituted or unsubstituted alkyl group having 1 to 30 carbon atoms.)
[Chem. 2]

[General Formula 2]

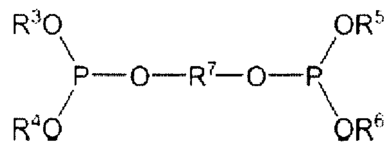

(In the formula, $R^3$, $R^4$, $R^5$, and $R^6$ each independently represent a substituted or unsubstituted alkyl group having 1 to 25 carbon atoms or a substituted or unsubstituted aryl group having 6 to 30 carbon atoms, and $R^7$ represents a substituted or unsubstituted alkylene group having 4 to 33 carbon atoms or a substituted or unsubstituted arylene group having 6 to 40 carbon atoms.)
[Chem. 3]

[General Formula 3]

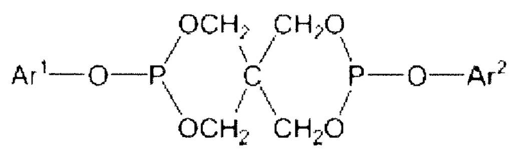

(In the formula, $Ar^1$ and $Ar^2$ each independently represent a substituted or unsubstituted aryl group having 6 to 3 5 carbon atoms.)
[Chem. 4]

[General Formula 4]

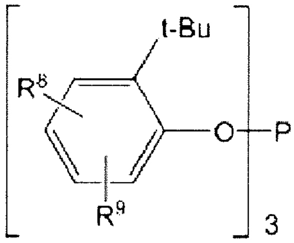

(In the formula, $R^8$ and $R^9$ each independently represent a hydrogen atom or a substituted or unsubstituted alkyl group having 1 to 4 carbon atoms.)
[Chem. 5]

[General Formula 5]

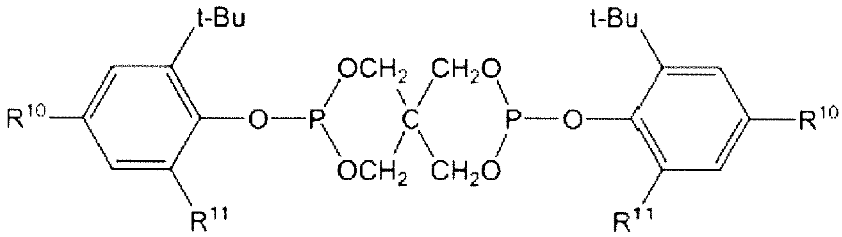

(In the formula, $R^{10}$ and $R^{11}$ each independently represent a hydrogen atom or a substituted or unsubstituted alkyl group having 1 to 4 carbon atoms.)
[Chem. 6]

[General Formula 6]

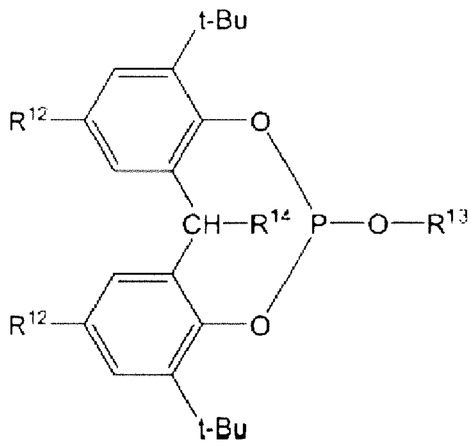

(In the formula, $R^{12}$ and $R^{14}$ each independently represent a hydrogen atom or a substituted or unsubstituted alkyl group having 1 to 4 carbon atoms, and $R^{13}$ represents a substituted or unsubstituted alkyl group having 1 to 18 carbon atoms. [Chem. 7]

[Chemical Formula S1]

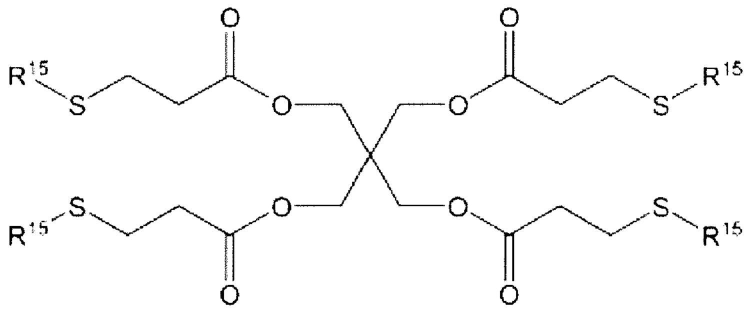

$R^{15}$: alkyl group having 12 carbon atoms

[Chemical Formula S2]

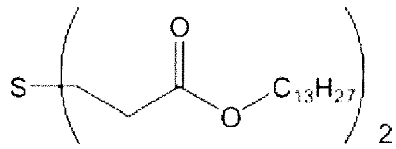

4. The method for manufacturing a coated semiconductor nanoparticle according to any one of claims 1 to 3, wherein, in the step, the antioxidant is added to the dispersion in which the semiconductor nanoparticles are dispersed such that the ratio of the antioxidant is 0.1 to 200 mol% with respect to 1 mol of the semiconductor nanoparticle.

5. A coated semiconductor nanoparticle manufactured by the manufacturing method according to any one of claims 1 to 4.

6. A semiconductor nanoparticle aggregate containing an agglomerate in which the plurality of the coated semiconductor nanoparticles according to claim 5 is agglomerated.

FIG.1

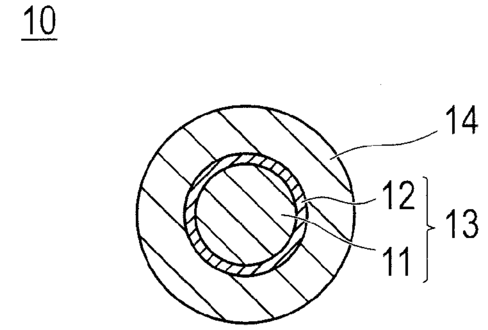


FIG.2

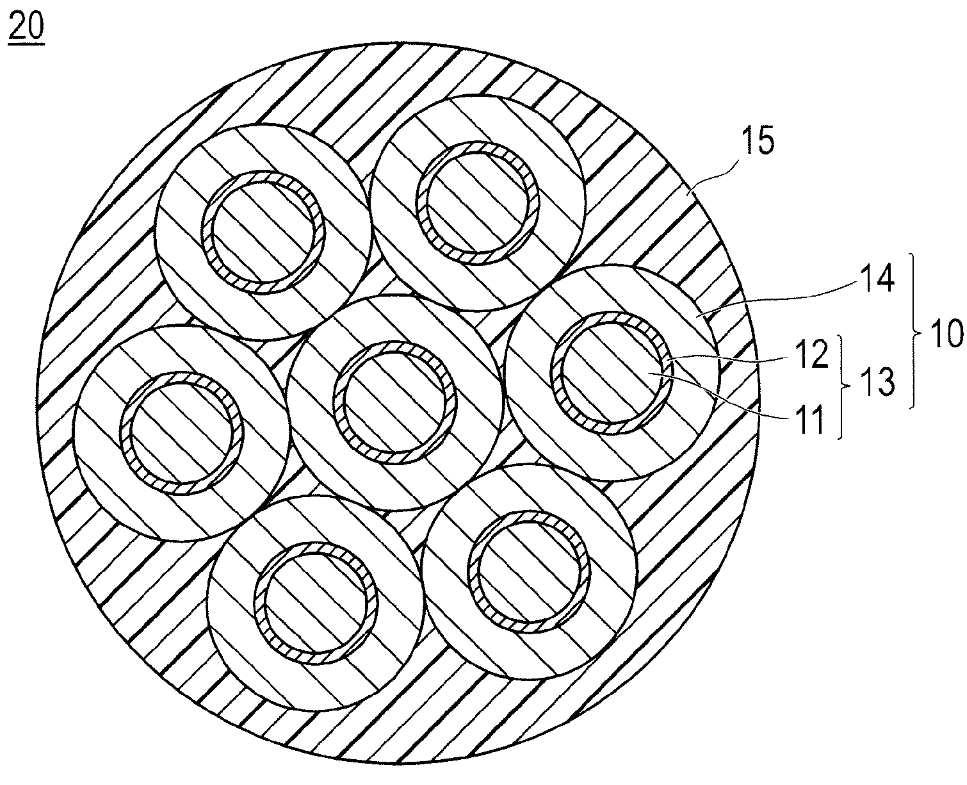

Europäisches Patentamt
European Patent Office
Office européen des brevets

# EUROPEAN SEARCH REPORT

Application Number
EP 16 16 0227

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/029802 A1 (YING JACKIE Y [SG] ET AL) 9 February 2006 (2006-02-09) * paragraph [0072] * ----- | 1,5 | INV. C09K11/02 C09K15/12 C09K15/32 |
| A | US 2013/112942 A1 (KURTIN JUANITA [US] ET AL) 9 May 2013 (2013-05-09) * paragraph [0087]; claim 16; example 6 * ----- | 1-6 | |
| A | US 2015/053914 A1 (KURTIN JUANITA N [US] ET AL) 26 February 2015 (2015-02-26) * paragraphs [0106] - [0109]; examples 5,6,7,11 * ----- | 1-6 | |
| A | JAN ZIEGLER ET AL: "Silica-Coated InP/ZnS Nanocrystals as Converter Material in White LEDs", ADVANCED MATERIALS, WILEY - V C H VERLAG GMBH & CO. KGAA, DE, vol. 20, no. 21, 3 November 2008 (2008-11-03), pages 4068-4073, XP002639985, ISSN: 0935-9648, DOI: 10.1002/ADMA.200800724 [retrieved on 2008-10-13] * the whole document * ----- | 1-6 | TECHNICAL FIELDS SEARCHED (IPC) C09K |
| A | EP 2 050 753 A1 (AIR PROD & CHEM [US]) 22 April 2009 (2009-04-22) * the whole document * ----- | 1-6 | |

The present search report has been drawn up for all claims

1

| Place of search | Date of completion of the search | Examiner |
|---|---|---|
| The Hague | 12 July 2016 | Vanier, Cécile |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT ON EUROPEAN PATENT APPLICATION NO. EP 16 16 0227

This annex lists the patent family members relating to the patent documents cited in the above-mentioned European search report. The members are as contained in the European Patent Office EDP file on
The European Patent Office is in no way liable for these particulars which are merely given for the purpose of information.

12-07-2016

| Patent document cited in search report | Publication date | Patent family member(s) | Publication date |
|---|---|---|---|
| US 2006029802 A1 | 09-02-2006 | CA 2576111 A1 | 08-06-2006 |
| | | CN 101040183 A | 19-09-2007 |
| | | EP 1787112 A1 | 23-05-2007 |
| | | JP 2008516782 A | 22-05-2008 |
| | | JP 2011251283 A | 15-12-2011 |
| | | KR 20070059066 A | 11-06-2007 |
| | | US 2006029802 A1 | 09-02-2006 |
| | | US 2008258115 A1 | 23-10-2008 |
| | | US 2011073811 A1 | 31-03-2011 |
| | | WO 2006060041 A1 | 08-06-2006 |
| US 2013112942 A1 | 09-05-2013 | CN 104024370 A | 03-09-2014 |
| | | CN 104066813 A | 24-09-2014 |
| | | CN 104302729 A | 21-01-2015 |
| | | EP 2798036 A1 | 05-11-2014 |
| | | EP 2798037 A1 | 05-11-2014 |
| | | EP 2798038 A1 | 05-11-2014 |
| | | JP 2014534322 A | 18-12-2014 |
| | | JP 2015504459 A | 12-02-2015 |
| | | JP 2015504596 A | 12-02-2015 |
| | | KR 20140102210 A | 21-08-2014 |
| | | KR 20140102211 A | 21-08-2014 |
| | | KR 20140109377 A | 15-09-2014 |
| | | US 2013112942 A1 | 09-05-2013 |
| | | US 2015221838 A1 | 06-08-2015 |
| | | US 2016141463 A1 | 19-05-2016 |
| | | WO 2013070319 A1 | 16-05-2013 |
| | | WO 2013070320 A1 | 16-05-2013 |
| | | WO 2013070321 A1 | 16-05-2013 |
| US 2015053914 A1 | 26-02-2015 | US 2015053914 A1 | 26-02-2015 |
| | | WO 2015026464 A1 | 26-02-2015 |
| EP 2050753 A1 | 22-04-2009 | CN 101412730 A | 22-04-2009 |
| | | EP 2050753 A1 | 22-04-2009 |
| | | JP 2009102317 A | 14-05-2009 |
| | | KR 20090038385 A | 20-04-2009 |
| | | SG 152148 A1 | 29-05-2009 |
| | | TW 200916475 A | 16-04-2009 |
| | | US 2008042105 A1 | 21-02-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015054008 A
- JP 2005039251 A
- JP 2006335873 A
- JP 2006282977 A
- WO 2011081037 A
- JP 2002322468 A
- JP 2005239775 A
- JP 10310770 A
- JP 2000104058 A
- JP 6279015 A
- JP 2003515459 W
- JP 2004356163 A
- JP 5238827 A
- JP 6122852 A
- JP 6240208 A
- JP 6299118 A
- JP 6306329 A
- JP 7196986 A